Europäisches Patentamt

European Patent Office

Office européen des brevets

(19)

(11) Veröffentlichungsnummer: **0 344 152 B1**

(12) **EUROPÄISCHE PATENTSCHRIFT**

(45) Veröffentlichungstag der Patentschrift: **19.12.90**

(21) Anmeldenummer: **87907589.3**

(22) Anmeldetag: **29.10.87**

(86) Internationale Anmeldenummer:
**PCT/EP87/00641**

(87) Internationale Veröffentlichungsnummer:
**WO 88/03048 05.05.88 Gazette 88/10**

(51) Int. Cl.⁵: **B 01 D 37/00, B 01 D 36/02, C 02 F 11/12**

(54) **VERFAHREN ZUM ENTWÄSSERN VON ABWASSERSCHLAMM UND ANLAGE ZUR DURCHFÜHRUNG DES VERFAHRENS.**

(30) Priorität: **29.10.86 DE 3636727**

(43) Veröffentlichungstag der Anmeldung:
**06.12.89 Patentblatt 89/49**

(45) Bekanntmachung des Hinweises auf die Patenterteilung:
**19.12.90 Patentblatt 90/51**

(84) Benannte Vertragsstaaten:
**AT BE CH DE FR GB IT LI LU NL SE**

(56) Entgegenhaltungen:
**EP-A- 53 250**
**EP-A- 119 987**
**EP-A- 213 402**
**DE-A-2 251 265**
**FR-A-2 351 060**
**GB-A-2 048 845**

(73) Patentinhaber: **MERAI, Josef**
**Sulzbachtalstr. 38**
**D-6603 Sulzbach/Saar (DE)**

(72) Erfinder: **MERAI, Josef**
**Sulzbachtalstr. 38**
**D-6603 Sulzbach/Saar (DE)**

(74) Vertreter: **Flaccus, Rolf-Dieter Patentanwälte**
**Klöpsch & Flaccus**
**An Gross St. Martin 6**
**D-5000 Köln 1 (DE)**

**Description**

Die Erfindung betrifft ein Verfahren zum Entwässern von Abwasserschlamm, bei dem der pumpfähige und durch Zerkleinern von Feststoffen pumpfähig gemachte Schlamm einer chemischen Vorbehandlung mittels Zusatz von Flockengsmitteln unterworfen wird, wonach der Schlamm durch Schwerkraftfiltration vorentwässert und anschließend durch Druckfiltration bis auf eine Trockensubstanz von etwa 50% zu Schlammkuchen entwässert wird, der einer Trocknung unterworfen wird. Ein derartiges Verfahren ist nach der EP—A—0 119 987 Stand der Technik. Das in dieser Literaturstelle beschriebene Verfahren sieht für die Verbesserung der Entwässerbarkeit des Schlammes vor, daß der Schlamm auf 100 bis 200°C aufgekocht wird. Damit wird der Einsatz von Primärenergie zur Entwässerung erforderlich. Im übrigen wird zur Schwerkraftfiltration die Verwendung von Siebbandpressen empfohlen, in denen eine Vorentwässerung unter Anwendung eines geringen Preßdruckes erfolgen soll.

Die gleiche Beeintrachtigung der Entwässerbarkeit ist zu erwarten, wenn nach dem in der DE—A1—28 38 899 beschriebenen Verfahren der zerkleinerte und chemisch vorbehandelte Schlamm unmittelbar einer Extraktorpresse zugeführt wird, in der der Schlamm von einer Schnecke von unten nach oben gefördert, also gepumpt wird. Eine chemische Vorbehandlung des Schlammes mit Flockungsmitteln wird jedoch ebenfalls in der Wirkung beeinträchtigt; wenn der so behandelte Schlamm einer Pumpwirkung ausgesetzt wird.

Auch in der EP—A—0 053 250 ist ein Verfahren zum Entwässern von Klärschlämmen auf Filterpressen beschrieben, das eine Schwerkraftfiltration und eine darauffolgende Druckfiltration umfaßt. In der Schwerkraftfiltration soll die Hauptmenge des Wassers ohne Anlegen einer Druckdifferenz abgetrennt werden. Dieses bekannte Verfahren basiert auf der Zugabe von großen Mengen von Kohlenstaub, womit die Trockensubstanz aufgebessert wird. Auf diese Weise werden mit Kammerfilterpressen Trockensubstanzen zwischen 40 bis 50% erreicht. Die zugegebene Menge von fremden Trockensubstanzen in Form von Kohlenstaub oder Aschen verfälscht jedoch die erhaltenen Trockenheitswerte beträchtlich. Im übrigen wird auch bei diesem Verfahren der vorentwässerte Schlamm mit Hilfe von Kolbenmembranpumpen in eine Kammerfilterpresse gefördert. Der erhaltene Preßkuchen soll als Brennstoff verwendet werden, was durch die vorherige Zugabe von Kohlenstaub als Trockensubstanz zu erwarten ist.

Grundsätzlich sind bischerige Schlamm-Entwässerungsverfahrern vornehmlich darauf gerichtet, das Volumen des Schlammes weitgehend zu reduzieren, um damit Deponievolumen sowie Transport- und Deponiekosten einzusparen, wie auch dem Schlamm eine möglichst hohe Scherfestigkeit zu geben, um die Deponiefähigkeit über die Zeit zu gerantieren. Dabei erreichen die zur Zeit besten Entwässerungsaggregate, die Kammerfilterpressen, maximal nur 32—35% TS (Trockensubstanz). Das Ergebnis ist eine relativ hohe Restfeuchte, die eine Deponierbarkeit in Frage stellt. So geht die Entwicklung dahin, Klärschlamm unter Zusatz von Primärenergie zu verbrennen, d. h. den Schlamm zu vernichten.

Klärschlamm ist jedoch ein zu wertvolle Stoff, um ihn einfach unter Inanspruchnahme von Deponiefläche wegzuwerfen oder zu vernichten, und das noch unter Einsatz von Primärenergie.

Die Erfindung hat sich die Aufgabe gestellt, ein Verfahren und eine Anlage zur Durchführung des Verfahrens anzugeben, mit denen es gelingt, ohne zufuhr von Primärenergie und ohne Zuschlag von Trockensubstanzen in wirtschaftlich kürzester Zeit derartige Trocknungsgrade zu erreichen, daß der erzeugte Schlammkuchen als Energieträger zur Verbrennung, zur Pyrolyse, Ölgewinnung oder als Streudünger verwendet werden kann.

Die Lösung dieser Aufgabe besteht aus einem Verfahren, nach dem der chemisch vorbehandelte und vorentwässerte Schlamm bis zur Druckfiltration pumpenfrei weiterbefördert wird, in der der Schlamm soweit zu hartem Schlammkuchen entwässert wird, daß nach einem Zerkleinern des Schlammkuchens Stücke erhalten werden, die in angehäufter Konsistenz formbeständig bleiben, wonach die Schlammkuchenstücke in angehäufter Konsistenz auf Trockenbändern an freier Luft auf etwa 90—95% Trockensubstanz nachentwässert werden. Diese Lösung beruht auf der Erkenntnis, daß die Entfernung des Wassers aus einer Schlammasse physikalischen Gesetzmäßigkeiten unterworfen ist, die in den verschiedenen Phasen der Entwässerung unterschiedlich sind. Daher wird der chemisch vorbehandelte Schlamm zunächst unter pumpenfreier Weiterbeförderung, d. h. auf reinem Gravitationsweg, einer Vorentwässerung unterzogen, und zwar auf ca. 20% Trockensubstanz. Die pumpenfreie Weiterbeförderung ist wichtig, um eine Zerstörung der sich unter dem Zusatz eines Flockungsmittels gebildeten Flocken zu vermeiden, so daß der Schlamm in einer Konsistenz der Presse zugeführt werden kann, die eine Entwässerung bis zu 50% Trockensubstanz in wirtschaftlich kürzester Zeit ermöglicht. Die Entwässerung beim maschinellen Pressen ist soweit zu treiben, daß nach einem Zerkleinern des harten Schlammkuchens Stücke erhalten werden, die eine dritte Stufe, nämlich eine Nachentwässerung bzw. Trocknung über Trockenbänder durch ihre Formbeständigkeit überstehen, wenn sie aufeinandergehäuft werden. Die Schlammkuchenstücke sollen so hart sein, daß sie nicht zu Klumpen zusammenfallen. Hierdurch ist ein Luftzutritt zu den Schlammkuchenstücken unabhängig von ihrer Anhäufung auf den Trockenbändern sichergestellt, so daß eine Nachentwässerung bzw. Nachtrocknung bis auf etwa 90 bis 95% TS erreichbar ist.

Zur Durchführung des Verfahrens dient eine Anlage, bestehend aus

a) einer Station zur chemischen Vorbehandlung mit Behältern für Zusatzmaterialien, Dosierpumpen zum Einleiten der Zusatzmaterialien in eine mit Mischern versehene Schlammleitung,

b) einer Vorentwässerungsstation mit mindestens zwei etagenförmig übereinander angeordneten, zickzackförmig hintereinander geschalteten Vorentwässerungsbändern mit Wannen zum Auffangen des Wassers und Waschanlagen für das Untertrum eines jeden Bandes,

c) einem Schlammsilo unterhalb der Vorentwässerungsstation, in den der Schlamm durch Gravitation übergeleitet wird,

d) einer unterhalb des Schlammsilos angeordneten Pressenstation mit mindestens einer von oben mit vorentwässertem Schlamm beschickbaren Filterpresse,

e) einer Zerkleinerungsstation zum Kerzleinern des harten Schlammkuchens mit einer Pelletiermaschine oder dergleichen, um Schlammstücke mit großer Oberfläche zu erhalten, und

f) einer aus Trockenbändern bestehenden Nachentwässerungsstation.

Neben dem pumpenfreien Transport des durch Gravitation vorentwässerten Schlammes bis zur Pressenstation ist hervorzuheben, daß mindestens eine Presse, bei größeren zu bewältigenden Schlammengen auch mehrere im Wechsel beschickte Pressen, von oben beschickbar sind, d.h. nicht mittels einer Schlammpumpe. Eine Entwässerungseinrichtung nach der DE—OS 28 44 716 mit ansteigendem Druck in einer Ausführung ohne Speisepumpe wäre verwendbar.

Mit Rücksicht auf die Forderung, daß die mechanische Presse von oben allein durch Gravitation mit vorentwässertem Schlamm beschickt werden muß, wird eine Pressenstation empfohlen, bei der der Schlammsilo mit einer Filterpresse mit schlauchförmiger Gummimembrane kombiniert ist, wie in den Patentansprüchen 3 bis 5 angegeben und in der Zeichnungsbeschreibung näher erläutert.

Das Zerkleinern des Schlammkuchens z.B. durch eine Pelletiermaschine ist zweckmäßig, um Schlammkuchenstücke mit großer Oberfläche zu erhalten. Im gegebenen Zusammenhang mit der Führung des Verfahrens, insbesondere mit dem Pressen bis zu etwa 50% Trockensubstanz und der sich daraus ergebenden Formbeständigkeit der Stücke, wird die Auslegung einer Nachentwässerungsstation mit einer entsprechenden Anzahl von Etagen von Trockenbändern sinnvoll und die Möglichkeit geschaffen, Restwasser bis zu 90 bis 95% Trockensubstanz durch Verdunsten zu entfernen. Es können auch mehrere Gruppen von übereinander angeordneten Trockenbändern hintereinandergeschaltet werden, wobei es sich empfiehlt, die Nachentwässerungsstation in der kalten Jahreszeit gewächshausähnlich abzudekken und zu temperieren, wozu ein Teil der erhaltenen Trockensubstanz als Energieträger verwendet werden kann.

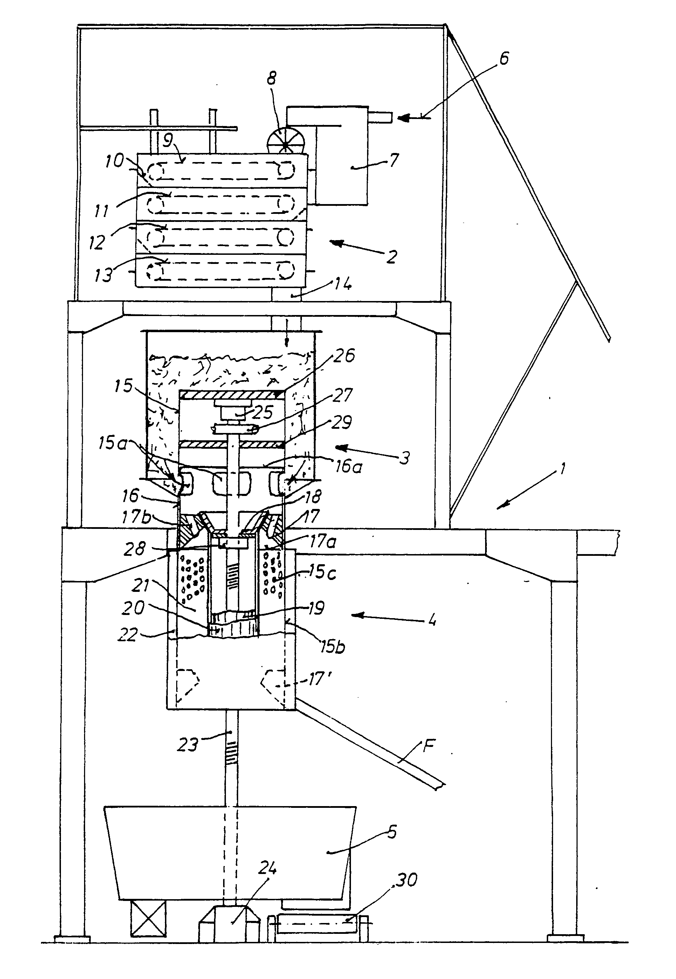

In der Zeichnung ist ein Ausführungsbeispiel einer Schlammentwässerungsanlage gemäß der Erfindung dargestellt. Man erkennt eine Gerüstkonstruktion 1 mit mehreren Etagen zur Aufnahme einer Vorentwässerungsstation 2 in der obersten Etage, des Schlammsilos 3 mit integrierter Filterpresse 4 in der mittleren Etage und einer Zerkleinerungsmaschine 5 auf dem Boden. Die Einrichtungen zur chemischen Vorbehandlung des Schlammes sowie die Trockenbänder zur Nachentwässerung der die Zerkleinerungsmaschine 5 verlassenden Schlammkuchenstücke sind nicht dargestellt.

Der zu entwässernde Schlamm wird in Pfeilrichtung 6 in ein Konditionierungsgefäß 7 eingeleitet, in dem der chemisch vorbehandelte Schlamm in Bewegung gehalten wird. In der nicht dargestellten Zufuhr für den chemisch vorbehandelten und mit einem Flockungsmittel versetzten Schlamm befindet sich die letzte Pumpe vor bzw. stromaufwärts von den Mischern, in denen der Schlamm mit Flockungsmitteln versetzt wird. Aus dem Konditionerungsgefäß 7 wird der Schlamm durch Uüberlauf auf ein sich drehendes Zellenrad 8 übergeben, das den Schlamm kontinuierlich auf ein oberes Vorentwässerungsband 9 ablegt, das von rechts nach links fördert. Das Förderband 9 ist als Siebband ausgeführt, so daß dem Schlamm eine große Menge Wasser während des Transportes entzogen wird. Der von dem Vorentwässerungsband 9 abgeworfene Schlamm wird über eine Rutsche 10 einem tiefer angeordneten weiteren Vorentwässerungsband 11 durch gefälle zugeführt. Im ganzen sind vier etagenförmig übereinander angeordnete, zickzackförmig hintereinandergeschaltete Vorentwässerungsbänder 10 bis 13 vorgesehen, die mit Wannen zum Auffangen des Wassers versehen sind. Nicht dargestellt sind Waschanlagen für die Untertrums eines jeden Bandes.

Der die Vorentwässerungsstation 2 verlassende Schlamm ist bis auf 20% vorentwässert und wird über ein Fallrohr 14 dem Schlammsilo 3 zugeleitet. In diesem Schlammsilo ist ein oben geschlossener und in Bodennähe des Solis mit umfangsverteilten Durchgangsöffnungen 15a versehener Außenzylinder 15 fest eingebaut, der sich weit außerhalb des Schlammsilos 3 erstreckt und in seinem unteren Bereich Teil der Filterpresse 4 ist, wie noch erläutert wird. Die umfangsverteilten Durchgangsöffnungen 15a des feststehenden Außenzylinders 15 innerhalb des Schlammsilos 3 sind durch einen senkrecht verstellbaren Zylinder 6, der innerhalb des Außenzylinders 15 geführt ist, wahlweise abzudecken oder freizugeben. In der dargestellten Höhenlage des verstellbaren Zylinders 16 korrespondieren die Durchgangsöffnungen 15a mit entsprechenden Durchgangsöffnungen des verstellbaren Zylinders 16, so daß der vorentwässerte Schlamm in Pfeilrichtung in das Innere des verstellbaren Zylinders 16, der an seinem oberen Rand 16a verschlossen ist, eintreten kann. In einer nicht dargestellten angehobenen Stellung des Verstellzylinders 16 sind die Durchgangsöffnungen 15a abgedeckt.

Auch der höhenverstellbare Zylinder 16 gehört ebenso wie der feststehende Außenzylinder 15 zu der Filterpresse 4. Der verstellbare, quasi als ein Steuerschieber wirkende Zylinder 16 ist an seinem unteren Ende über zwei konzentrische Einbauringe 17, 18 mit einem geschlossenen Innenzylinder 19 kleineren Durchmessers verbunden. Dieser Innenzylinder ist von einem aufblasbaren Gummischlauch 20 als Gummimembrane umgeben, der an seinen beiden Enden zwischen Paaren von konzentrischen Einbauringen 17, 18 eingespannt ist. Das nicht erkennbare untere Paar von konzentrischen und miteinander verspannten Einbauringen 17, 18 ist im Gegensatz zu dem oberen Ringpaar ausschließlich von dem geschlossenen Innenzylinder 19 getragen, da der verstellbare Zylinder 16 nur bis zu der unteren Kante 17a des äußeren Einbauringes 17 mit keilförmigem Ringquerschnitt reicht.

Wie schon ausgeführt, ist der feststehende Außenzylinder 16 weit aus dem Schlammsilo 3 hinausgeführt und auf seinem unteren Bereich 15b mit Löchern 15c versehen. Der Zylinderbereich 15b ist der gelochte Blechmantel der Filterpresse 4, der zwischen sich und der Gummimembran 20 die ringförmige Filterkammer 21 bildet. Außen ist der gelochte Bereich 15b von einem Ringraum 22 zur Aufnahme des Filtrats umgeben, das über die schematisch angedeutete Leitung F abgeleitet wird.

Der obere äußere Einbauring 17 ist mit umfangsverteilten Bohrungen 17b versehen, über die die Filterkammer 21 mit dem geschlossenen Innenraum des verstellbaren Zylinders 16 kommuniziert.

Zur Höhenverstellung des Zylinders 16 samt Einbauringen 17, 18, Innenzylinder 19 und Gummimembran 20 dient eine zentrale Gewindespindel 23, die durch die Zerkleinerungsmaschine 5 hindurchgeführt ist und unten über ein Drucklager 24 abgestützt ist. Am oberen Ende ist die Gewindespindel 23 in einer Lagerhülse 25 am Deckel 26 des feststehenden Außenzylinders 15 gelagert. Über ein Schneckenrad 27 ist die Gewindespindel 23 drehbar angetrieben, und zwar von einem nicht dargestellten Getriebemotor aus, der innerhalb des feststehenden Außenzylinders 15 angeordnet ist. Der obere innere Einbauring 18, mit dem sowohl der verstellbare Zylinder 16 als auch der Innenzylinder 19 mit Gummimembran 20 verbunden ist, ist mit einer feststehenden Mutter 28 verbunden, so daß sich eine Drehbewegung der Gewindespindel 23 in einer höhenverstellung des inneren Teils der Filterpresse mit den Teilen 16 bis 20 auswirkt.

In der Zerkleinerungsmaschine 5 wird der aus der Filterpresse 4 herabfallende Filterkuchen zerkleinert und in Stücken auf einem Förderband 30 abgelegt, das zu der nicht dargestellten Pelletiermaschine und weiter zur Nachentwässerungsstation im Freien führt.

## Patentansprüche

1. Verfahren zum Entwassern von Abwasserschlamm, bei dem der pumpfähige oder durch Zerkleinern von Feststoffen pumpfähig gemachte Schlamm einer chemischen Vorbehandlung mittels Zusatz von Flockungsmitteln unterworfen wird, wonach der Schlamm durch Schwerkraftfiltration vorentwässert und anschließend durch Druckfiltration bis auf eine Trockensubstanz von etwa 50% zu Schlammkuchen entwässert wird, der einer Trocknung unterworfen wird, dadurch gekennzeichnet, daß der chemisch vorbehandelte und vorentwässerte Schlamm bis zur Druckfiltration pumpenfrei weiterbefördert wird, in der der Schlamm soweit zu hartem Schlammkuchen entwässert wird, daß nach einem Zerkleinern des Schlammkuchens Stücke erhalten werden, die in angehäufter Konsistenz formbeständig bleigen, und daß die Schlammkuckenstücke in angehäufter Konsistenz auf Trockenbändern an freier Luft auf 90 bis 95% Trockensubstanz nachentwässert werden.

2. Anlage zur Durchführung des Verfahrens nach Anspruch 1 gekennzeichnet durch

a) eine Station zur chemischen Vorbehandlung mit Behältern für Flockungsmittel und Dosierpumpen zum Einleiten der Flockungsmittel in eine mit Mischern versehene Schlammleitung (6),

b) eine Vorentwässerungsstation (2) mit mindestens zwei etagenförmig übereinander angeordneten, zickzackförmig hintereinander geschalteten Vorentwässerungsbändern (9 bis 13) mit Wannen zum Auffangen des Wassers und Waschanlagen für das Untertrum eines jeden Bandes,

c) einen Schlammsilo (3) unterhalb der Vorentwässerungsstation (2), in den der Schlamm durch Gravitation übergeleitet wird,

d) eine unterhalb des Schlammsilos angeordnete Pressenstation mit mindestens einer von oben mit vorentwässertem Schlamm beschickbaren Filterpresse (4).

e) eine Zerkleinerungsstation (5) zum Zerleinern des harten Schlammkuchens mit einer pelletiermaschine oder dergleichen, um Schlammstücke mit großer Oberfläche zu erhalten und

f) eine aus Trockenbändern bestehende Nachentwässerungsstation.

3. Anlage nach Anspruch 2, dadurch gekennzeichnet, daß in dem Schlammsilo (3) ein oben geschlossener und in Bodennähe mit umfangsverteilen Durchgangsöffnungen (15a) versehener Außenzylinder (15) fest eingebaut ist, in dem ein senkrecht verstellbarer Zylinder (16) zum wahlweisen Abdecken und Freigeben der Durchgangsöffnungen geführt ist.

4. Anlage nach Anspruch 5, dadurch gekennzeichnet, daß der feststehende Außenzylinder (15) sich bis außerhalb des Schlammsilos (3) erstreckt und auf seinem unteren Abschnitt (15b) mit Löchern (15c) versehen und von einem Ringraum (22) zur Aufnahme des Filtrats umgeben ist, und der verstellbare Zylinder (16) an seinem unteren Ende über zwei konzentrische Einbauringe (17, 18) mit einem geschlossenen Innenzylinder (19) kleineren Durchmessers verbunden ist, der von einem aufblasbaren Gummischlauch (20) umgeben ist, der an seinen beiden Enden zwischen Paarer von konzentrischen Einbauringen (17, 18) eingespannt ist, daß die zwischen dem Gummischlauch (20) und dem gelochten Abschnitt (15b) des feststehenden Außerzylinders (15) gebildete ringförmige Filterkammer (21) über Bohrungen (17b) im äußeren, oberen Einbauring (17) mit dem Innenraum des verstellbaren Zylinders (15) mit einer Abstreifkante (17a) zum Lösen des am gelochten Abschnitt (15b) des feststehenden Außerzylinders (15) anhaftenden Filterkuchens versehen ist.

5. Anlage nach Anspruch 4, dadurch gekennzeichnet, daß der von dem oberen Paar von Einbauringen (17, 18) getrennte und mit geschlossenem Zylindermantel ausgeführte verstellbare Zylinder (16) durch die Höhenverstellung des verstellbaren Pressenteils (17—20) mittelbar aus einer durch Anschlag fixierten unteren Schließlage soweit anhebbar ist, daß die Durchgangsöffnungen (15a) des feststehenden Außenzylinders (15) unmittelbar mit der Filterkammer (21) kommunizieren.

## Revendications

1. Procédé pour asséchement de vase d'égout, dans laquelle la boue pompable ou faite pompable par concassage de matières solides est soumise à un prétraitement chimique par l'intermédiaire d'addition de moyens de floculation; la boue est alors préliminairement asséchée par filtration par gravité et ensuite asséchée par filtration pression jusqu'à atteindre un tourteau de boue ayant une matière séche de 50% environ, qui a son tour sera soumis à une déshydratation, charactérisé par le fait que la boue prétraitée chimiquement et préliminairement asséchée est transportée jusqu'a la filtration pression sans aucun pompage, dans laquelle la boue est déshydratée jusqu'à la formation d'un tourteau de boue solide, qui après concassage donnera des morceaux qui à leur tour en une consistance accumulée restent stables (résistent à la déformation), et que d'autre part les morceaux de tourteau seront soumis à un asséchement subséquent en plein air sur des bandes d'asséchement pour obtenir une matière séche de 90 à 95%.

2. L'installation pour l'exécution du procédé selon revendication 1 charactérisée par:

a) une station pour prétraitement chimique avec récipients pour agent de floculation et pompes de dosage pour l'intruduction des agents de floculation dans une conduite de boue pourvue de malaxeurs (6),

b) une station de pré-asséchement (2) avec au moins deux bandes d'asséchement préliminaire arrangés l'un au-dessus de l'autre en forme d'étage et montés en serie (9 à 13) équipés de vannes pour le captage de l'eau et de station de lavage pour le dessous de chaque bande,

c) un silo de boue (3) en-dessous de la station de prédeshydratation (2), dans leque la boue sera transportée par gravité,

d) une station de presses installée en-dessous du silo de boue avec au moins un filtre-presse (4) pouvant être charge par le haut avec la boue assèchée préliminairement,

e) une station de concassage (5) pour le concassage des tourteaux de boue solides équipée d'une machine à former des pellets ou similaire pour conserver des morceaux de boue à grande surface et

f) une station d'assèchement subséquent comportant des bandes d'assèchement.

3. Installation selon revendication 2, charactérisé comme suit: Dans le silo de boue (3) est incorporé un cylindre extérieur (15) formé par le haut et pourvu à proximité du sol d'ouvertures de passage, cylindre dans lequel est introduit en autre cylindre réglable verticalement (16) pour ouvrir ou fermer les ouvertures de passages.

4. Installation selon revendication 5, charactérisée comme suit: Le cylindre extérieur fixe (15) s'étendant jusqu'à l'extérieur du silo de boue (3) est pourvu en sa partie inférieure (15b) de trous (15c) et entouré par une espace cirulaire (22) pour la réception du produit de filtrage; le cylindre réglable (16) est connecté en ses parties inférieures par deux anneaux concentriques incorporés (17, 18) avec un cylindre intérieur (19) de diamètre plus petit, qui a son tour est entouré par un tuyau en caoutchouc (20) gonflable, qui lui est encastré en ses deux bouts entre des paires d'anneaux concentrique (17, 18), de sorte que la chambre filtrante (21) annulaire se formant entre le tuyau en caoutchouc (20) et la partie perforée (15b) du cylindre extérieur fixe (15) communique avec l'espace intérieur du cylindre réglable (15) par des perforations (17b) dans l'anneau supérieur extérieur (17), et que l'anneau supérieur (17) est pourvu d'un bord racleur (17a) pour l'enlèvement du tourteau adhére à la partie perforée (15b) du cylindre extérieur fixe (15).

5. Installation selon revendication 4 charactérisée par: Le cylindre réglable extérieur (16) pourvu d'anneau coniques incorporés (17, 18) et équipé d'une enveloppe fermée, peut être directement détaché par l'intermédiaire du déplacement vertical de la partie de la presse réglable (17 à 20) d'une installation de fermeture inférieure fixée par arrêt autant que l'ouverture de passage (15a) du silo de boue fixe puisse communiquer indirectement avec la chambre filtrante (21).

## Claims

1. Procedure for dewatering of sewage sludge, whereby the pumpable sludge or the sludge made pumpable by breaking up solid substances is subjected to chemical pretreatment with addition of flocculation agents; thereafter the sludge is pre-dewatered by gravity filtration and then it is dehydrated to form a press cake by pressure filtration up to a dry substance of about 50% which is then subjected to drying, characterized by the fact that the chemically pretreated and pre-dewatered sludge is conveyed without pumping to the press filtration, that the sludge is dehydrated to form a hard press cake, that after crumbling the press cake pieces are obtained which maintain their shape, and that the sludge cake pieces are post-dried in accumulated consistency on drying belts up to 90 to 95% dry substance.

2. Plant for the execution of the procedure according to claim 1, characterized by

a) a station for the chemical pretreatment with receptacles for addition agents, dosing pumps for filling the addition agents into a sludge pipe provided with mixers (6),

b) a pre-dewatering station (2) with at least two pre-dehydration belts (9 to 13) superposed in different layers, connected in zigzag series with shells for the reception of water and washing stations for the empty belt of each conveyor,

c) a sludge silo (3) below the pre-dewatering station in which the sludge is conveyed by gravity,

d) a press station arranged below the sludge silo with at least one filter press (4) which may be loaded with pre-dehydrated sludge from the top,

e) a crushing unit (5) for the crumbling of the hard press cake with a pelletizer or similar to maintain sludge pieces with great surfaces, and

f) a post-dewatering station consisting of drying belts.

3. Plant according to claim 2, characterized by the fact that in the sludge silo (3) there is fixed a cylinder 15 closed on the top which may be elevated or lowered by means of a vertically adjustable cylinder (16), to cover or open the existing opening (15a) at the bottom of the sludge silo (3).

4. Plant according to claim 5, characterized by the fact that the fixed outer cylinder (15) reaches outside the sludge silo (3) and is provided in its lower section (15b) with perforations (15c) and enclosed by an annular chamber (22) for the reception of the filtrate, that the adjustable cylinder (16) is connected at its upper and lower edge over two concentric flush rings (17), (18) with a closed inner cylinder (19) of smaller diameter, which is encircled by an inflatable rubber tube (20), which is fixed at its both edges between pairs of concentric flush rings (17), (18). The annular filter chamber (21) constituted between the rubber tube (20) and the perforated section (15b) of the fixed outer cylinder (15) is connected with the sludge silo (3) when elevating the inner cylinder. The borings (17b) at the upper flush ring (17) allows the insertion of the air conduit into the adjustable cylinder (16) with the rubber balloon is blown up. The upper flush ring (17) is provided with a stripper edge (17a) for the loosening the press cake sticking to the preferred section (15b) of the fixed outer cylinder (15).

5. Plant according to claim 4, characterized by the fact that an adjustable cylinder (16) with elevation adjustment of the adjustable press part (17—20) may be directly elevated from a closed position at the lower part, that the opening (15a) of the sludge silo (3) is immediately connected with the filter chamber (21).